## Europäisches Patentamt

## European Patent Office

## Office européen des brevets

(19)

(11) Veröffentlichungsnummer : **0 362 618 B1**

(12)

# EUROPÄISCHE PATENTSCHRIFT

(45) Veröffentlichungstag der Patentschrift :
**16.09.92 Patentblatt 92/38**

(51) Int. Cl.⁵ : **F01M 11/12, G01F 23/00**

(21) Anmeldenummer : **89117344.5**

(22) Anmeldetag : **20.09.89**

(54) **Anordnung zum Messen des Ölstandes in einer Ölwanne des Kurbelgehäuses eines Verbrennungsmotors.**

(30) Priorität : **01.10.88 DE 3833453**

(43) Veröffentlichungstag der Anmeldung :
**11.04.90 Patentblatt 90/15**

(45) Bekanntmachung des Hinweises auf die
Patenterteilung :
**16.09.92 Patentblatt 92/38**

(84) Benannte Vertragsstaaten :
**AT BE CH DE ES FR GB GR IT LI LU NL SE**

(56) Entgegenhaltungen :
**DE-A- 2 847 036**
**FR-A- 2 217 531**
**FR-A- 2 522 065**

(56) Entgegenhaltungen :
**FR-A- 2 546 969**
**US-A- 1 497 814**
**US-A- 1 498 617**
**US-A- 1 573 868**
**US-A- 3 229 712**
**US-A- 4 572 120**

(73) Patentinhaber : **Gallert, Gustav**
**Hasenweg 19**
**W-4230 Wesel (DE)**

(72) Erfinder : **Gallert, Gustav**
**Hasenweg 19**
**W-4230 Wesel (DE)**

(74) Vertreter : **Funken, Josef, Dipl.-Ing.**
**Hochstrasse 3e**
**W-4133 Neukirchen-Vluyn (DE)**

EP 0 362 618 B1

## Beschreibung

Die Erfindung betrifft eine Anordnung zum Messen des Ölstandes in der Ölwanne des Kurbelgehäuses eines Verbrennungsmotors bei Motorstillstand, insbesondere für Kraftfahrzeuge und Motorboote mit einer Meßeinrichtung.

Die Ölwanne des Kurbelgehäuses eines Verbrennungsmotors muß mit einer solchen Menge Öl gefüllt sein, daß der Ölstand sich zwischen einer maximalen Höhe und einer minimalen Höhe befindet. Der Ölstand darf den Bereich zwischen der maximalen und der minimalen Höhe nicht verlassen. Da ein Verbrennungsmotor jedoch im Betrieb Öl verbraucht, sinkt der Ölstand im Laufe der Zeit. Es ist daher erforderlich, in bestimmten Zeitabständen bzw. nach bestimmten Fahrleistungen des Motors den Ölstand mit einem Ölmeßstab zu messen und erforderlichenfalls Öl nachzufüllen. Das jedoch wird mitunter vergessen, so daß es zu einem zu niedrigen Ölstand in der Ölwanne kommt.

Aus der FR-PS l0 l7 24l ist eine Anordnung zum Messen des Ölstandes in der Ölwanne des Kurbelgehäuses eines Verbrennungsmotors der einleitend genannten Art bekannt. Hierbei ist nur ein Ölstandsmeßgerät an einer Seite der Ölwanne vorgesehen, das über eine Ölleitung mit der Ölwanne in deren unterem Bereich verbunden ist. Durch das Ölstandsmeßgerät wird ein dem Ölstand entsprechender elektrischer Meßwert gebildet, der auf einem Anzeigegerät zur Anzeige gebracht wird. Die bekannte Meßanordnung liefert nur bei stationären Behältern genaue Meßwerte. Bei Schräglage des Behälters erhält man eine Messung, die dem Ölstand innerhalb der Ölwanne nicht entspricht, man erhält somit eine Falschmessung. Wenn ein Kraftfahrzeug sich in Schräglage befindet, ist eine zutreffende Messung des Ölstandes nicht möglich. Auch bei einem Motorboot, das im Hafen Schaukelbewegungen ausführt, ist eine zutreffende (Messung des Ölstandes in der Ölwanne nicht möglich.

In der DE-AS 24 05 862 ist eine Meßvorrichtung zur Anzeige des Flüssigkeitsstandes eines Fahrzeuges mit zwei in einem Flüssigkeitsbehälter auf gleicher Höhe angeordneten Meßfühlern beschrieben. Die zwei Meßfühler sind in diagonaler Anordnung zueinander innerhalb des Flüssigkeitsbehälters angebracht und stehen bei normalem Flüssigkeitsstand innerhalb des Flüssigkeitsbehälters mit der Flüssigkeit in Berührung. Wenn beide Meßfühler aus der Flüssigkeit austreten und daher mit der Flüssigkeit keinen Kontakt mehr haben, geben sie ein entsprechendes Ausgangssignal ab. Damit ist angezeigt, daß der Flüssigkeitsstand unterhalb eines Minimalwertes liegt. Mit der bekannten Meßvorrichtung ist es daher möglich, eine Anzeige zu bewirken, wenn der Flüssigkeitsspiegel zu tief abgesunken ist.

Der Erfindung liegt die Aufgabe zugrunde, eine Anordnung der einleitend genannten Art zu schaffen, mit der es möglich ist, den Ölstand des Motors beim Einschalten der Zündung am Armaturenbrett zur Anzeige zu bringen.

Diese Aufgabe wird erfindungsgemäß dadurch gelöst,

a) daß in Fahrzeuglängsrichtung bzw. Motorlängsrichtung gesehen zu beiden Längsseiten und außerhalb der Ölwanne wenigstens je ein Ölstandsmeßgerät vorgesehen ist und die Ölstandsmeßgeräte derart einander zugeordnet sind, daß die gedachte Gerade zwischen ihnen in der Draufsicht durch die Mitte der Ölwanne verläuft,

b) daß die Ölstandsmeßgeräte in Höhe der Ölwanne in gleicher Höhe angeordnet sind,

c) daß die Ölstandsmeßgeräte mit der Ölwanne in deren unterem Bereich durch Ölleitungen nach Art von kommunizierenden Gefäßen verbunden sind,

d) daß die Ölstandsmeßgeräte dem Ölstand entsprechende elektrische Meßwerte bilden und von den einzelnen elektrischen Meßwerten Durchschnittswerte gebildet werden und

e) daß am Armaturenbrett des Kraftfahrzeuges bzw. Motorbootes ein Anzeigegerät zur Anzeige der elektrischen Durchschnittswerte vorgesehen ist, das mit den Ölstandsmeßgeräten über elektrische Leitungen verbunden ist.

Hierdurch gelangt man zu einer Meßanordnung, mit der der Ölstand eines Verbrennungsmotors außerhalb der Ölwanne gemessen werden kann. Die Ölwanne und die beiden Ölstandsmeßgeräte stellen kommunizierende Gefäße dar, so daß die Oloberfläche insgesamt unabhängig von einer Schräglage des Kraftfahrzeuges eine horizontale Ebene darstellt. Wenn das Kraftfahrzeug eine Schräglage einnimmt, wird in dem auf niedrigerem Niveau befindlichen Ölstandsmeßgerät ein größerer Wert gemessen als in dem auf höherem Niveau befindlichen Ölstandsmeßgerät. Der Mittelwert der beiden Meßwerte ist gleich dem Ölstand in der Ölwanne.

Die einzelnen Ölstandsmeßgeräte bilden je einen dem gemessenen Ölstand entsprechenden elektrischen Meßwert, wobei entweder die Summe der Meßwerte oder aber der Mittelwert aus den einzelnen Meßwerten auf ein Anzeigegerät am Armaturenbrett gegeben wird. Hierdurch entfällt die Notwendigkeit, in bestimmten Zeitabständen den Ölstand mittels des Ölmeßstabes zu ermitteln.

Die Ölstandsmeßgeräte sind auf einer gemeinsamen horizontalen Ebene angeordnet und erstrecken sich über eine solche Höhe, daß auch bei Schräglage des Fahrzeuges in beiden Ölstandsmeßgeräten eine zuverlässige Messung des Ölstandes erfolgt.

Durch die Anordnung nur je eines Ölstandsmeßgerätes auf jeder Seite der Ölwanne ist bei einer Schräglage des Fahrzeuges eine zuverlässige Messung des Ölstandes in der Ölwanne möglich.

In weiterer vorteilhafter Ausgestaltung der Erfindung kann die Anordnung so getroffen sein, daß zu beiden Längsseiten und außerhalb der Ölwanne je zwei Ölstandsmeßgeräte mit Längsabstand zueinander vorgesehen sind, wobei jeweils das auf der einen Längsseite der Ölwanne vordere Meßgerät und das auf der anderen Längsseite rückwärtige Meßgerät paarweise derart einander zugeordnet sind, daß die gedachten Geraden zwischen diesen jeweiligen Meßgeräten in der Draufsicht durch die Mitte der Ölwanne verlaufen.

Auch hierdurch ist eine zuverlässige Messung des Ölstandes in der Ölwanne möglich.

Die Abstände zwischen den Meßgeräten und der Mitte der Ölwanne sind zweckmäßig gleich groß. Sollte diese Bedingung ausnahmsweise aus Platzgründen oder aus anderen Gründen nicht einzuhalten sein, so sind die gemessenen Werte entsprechend den unterschiedlichen Abständen umzurechnen und erst dann dem Anzeigegerät am Armaturenbrett zuzuführen.

Zweckmäßig sind die Meßgeräte symmetrisch zur Mitte der Ölwanne in einer gemeinsamen horizontalen Ebene angeordnet. Dadurch wird bei beliebigen Schräglagen des Fahrzeuges der Ölstand in der Ölwanne genau gemessen.

In vorteilhafter Ausgestaltung der Erfindung besteht ein Ölstandsmeßgerät aus einem Meßbehälter und einem darin angeordneten Meßfühler. Dabei können die Meßbehälter als Gefäße mit Entlüftung und die Meßfühler als Tauchrohrgeber ausgebildet sein. Die Meßfühler können auch Hebelgeber sein und die Meßbehälter die dazu passende Form haben. Hierbei stellt sich in den Meßbehältern ein von der Schräglage des Fahrzeuges abhängiger Ölstand ein, der von den zugehörigen Tauchrohrgebern bzw. Hebelgebern gemessen und in einen elektrischen Meßwert umgewandelt wird.

Des weiteren empfiehlt es sich, die Meßgeräte am Fahrzeugrahmen oder am Querstreben anzuordnen, der den Motor trägt. Dadurch werden die Vibrationen des Motors während des Laufes nicht auf die Meßgeräte übertragen, so daß Störungen an den Meßgeräten vermieden werden.

In den Ölleitungen zwischen den Meßgeräten und der Ölwanne kann jeweils ein flexibles Leitungsstück angeordnet sein. Dadurch ist gewährleistet, daß die Vibrationen des Motors nicht auf die Meßgeräte übertragen werden, falls die übrigen Olleitungen aus Metall bestehen.

Die Rohrleitungen sind zweckmäßig mit der tiefsten Stelle der Ölwanne verbunden.

Zweckmäßig ist der gemessene Wirt bis zum Ausschalten der Zündung am Anzeigegerät auch während der Fahrt des Fahrzeuges festzuhalten.

Das Anzeigegerät am Armaturenbrett kann auch justierbar sein. In diesem Falle ist die Bildung eines Durchschnittswertes aus den einzelnen Meßwerten nicht notwendig, sondern es kann die Summe der Einzelwerte dem Anzeigegerät zugeführt werden.

Die Anordnung kann auch so ausgebildet sein, daß ein Vorratsbehälter für das Öl vorgesehen ist, der über eine Zuleitung und eine Dosiereinrichtung mit der Ölwanne in Verbindung steht und in dem ein Vorratsgeber angeordnet ist, wobei der von dem Vorratsgeber gemessene dem Ölvorrat entsprechende elektrische Meßwert auf ein am Armaturenbrett angeordnetes Anzeigegerät für den Ölvorrat zu geben ist.

Dadurch besteht die Möglichkeit, bei Bedarf fehlendes Öl aus dem Vorratsbehälter in die Ölwanne nachzufüllen. Die Dosiereinrichtung kann als Dosierpumpe ausgebildet sein, mit der eine bestimmte Menge Öl nachgefüllt werden kann. Es besteht auch die Möglichkeit, die Dosierpumpe je nach festgestelltem Bedarf über ein Zeitrelais bzw. einen Zeitschalter eine bestimmte erforderliche Zeit läuft und Öl nachfüllt.

Die Erfindung wird nachfolgend anhand eines Ausführungsbeispieles des näheren erläutert. Es zeigt

Fig. I eine schematische Stirnansicht auf einen Verbrennungsmotor,

Fig. 2 eine der Figur I entsprechende Darstellung bei Schräglage des Fahrzeuges,

Fig. 3 schematisch einen horizontalen Schnitt durch Figur I in Höhe der Ölwanne und

Fig. 4 ebenfalls schematisch einen horizontalen Schnitt durch Figur I in Höhe der Ölwanne.

Die in der Zeichnung dargestellte Anordnung dient zum Messen des Ölstandes in der Ölwanne des Kurbelgehäuses eines Verbrennungsmotors. Ein lediglich schematisch dargestellter Motorblock I hat ein Kurbelgehäuse 2 und eine Ölwanne 3, die mit einer bestimmten Menge Öl 4 gefüllt ist. In die Ölwanne 3 ist ein Handmeßstab 5 getaucht.

In Fahrzeuglängsrichtung gesehen ist auf beiden Seiten des Motors I ein Ölstandsmeßgerät 6,7 vorgesehen. Das Ölstandsmeßgerät 6 besteht aus einem Meßbehälter 8, der an seinem oberen Ende 9 geschlossen ist und eine Entlüftung I0 aufweist. In dem Meßbehälter 8 ist ein Tauchrohrgeber II angeordnet, der mit seinem oberen Ende I2 aus dem Meßbehälter 8 herausragt. Der Meßbehälter 8 ist über eine Ölleitung I3, ein flexibles Leitungsstück I4 und eine weitere Ölleitung I5 mit einem Ölauslaß I6 der Ölwanne 3 verbunden.

Desgleichen besteht das Ölstandsmeßgerät 7 aus einem Meßbehälter I7, der an seinem oberen Ende I8 verschlossen ist und eine Entlüftung I9 aufweist. In dem Meßbehälter I7 ist ein Tauchrohrgeber 20 vorgesehen,

EP 0 362 618 B1

der mit seinem oberen Ende 2l aus dem Meßbehälter l7 herausragt.

Der Meßbehälter l7 ist über eine Ölleitung 22, ein flexibles Leitungsstück 23 und eine Ölleitung 24 mit dem Ölauslaß l6 der Ölwanne 3 verbunden.

Der Ölspiegel 25 im Meßbehälter 8 und der Ölspiegel 26 im Meßbehälter l7 liegen auf gleicher Höhe wie der Ölspiegel 27 in der Ölwanne 3.

Des weiteren ist ein Ölvorratsbehälter 28 mit einem Ölstandsmeßgerät 29 vorgesehen. Von dem Ölvorratsbehälter 28 führt eine Rohrleitung 30 über eine Dosierpumpe 3l und eine Rohrleitung 32 zu der Ölleitung 22. Der Ölstand in dem Ölvorratsbehälter 28 wird über eine elektrische Leitung 33 zu einem Ölvorratsanzeiger 34 gegeben.

Am Armaturenbrett ist ein Ölstandsanzeiger 35 vorgesehen. Auf der Skala 36 des Ölstandsanzeigers 35 sind eine Markierung 37 für das Maximum und eine Markierung 38 für das Minimum des Ölstandes angebracht. Die Skala 36 reicht über beide Markierungen 37 und 38 etwas hinaus, damit auch noch ein solcher Ölstand angezeigt werden kann, der unterhalb des zulässigen Minimums bzw. oberhalb des zulässigen Maximums für den Ölstand liegt. Im dargestellten Ausführungsbeispiel zeigt die Anzeige 39 einen Ölstand zwischen den beiden Markierungen 37 und 38 für das Minimum und das Maximum an.

Von dem Tauchrohrgeber 20 führen elektrische Leitungen 40 und 4l zu dem Ölstandsanzeiger. Desgleichen ist der Tauchrohrgeber ll über elektrische Leitungen 42 und 4l mit dem Ölstandsanzeiger verbunden. Die in den beiden Tauchrohrgebern ll und 20 ermittelten Meßwerte werden über die Leitungen 40,4l ,42 dem Ölstandsanzeiger zugeführt, so daß am Ölstandsanzeiger der ermittelte Ölstand angezeigt wird.

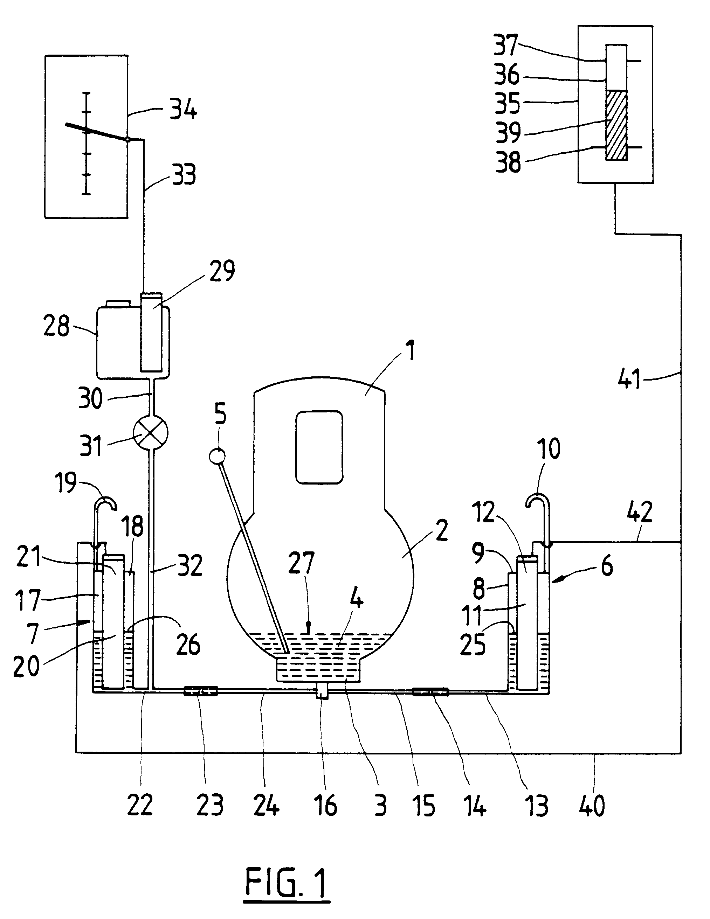

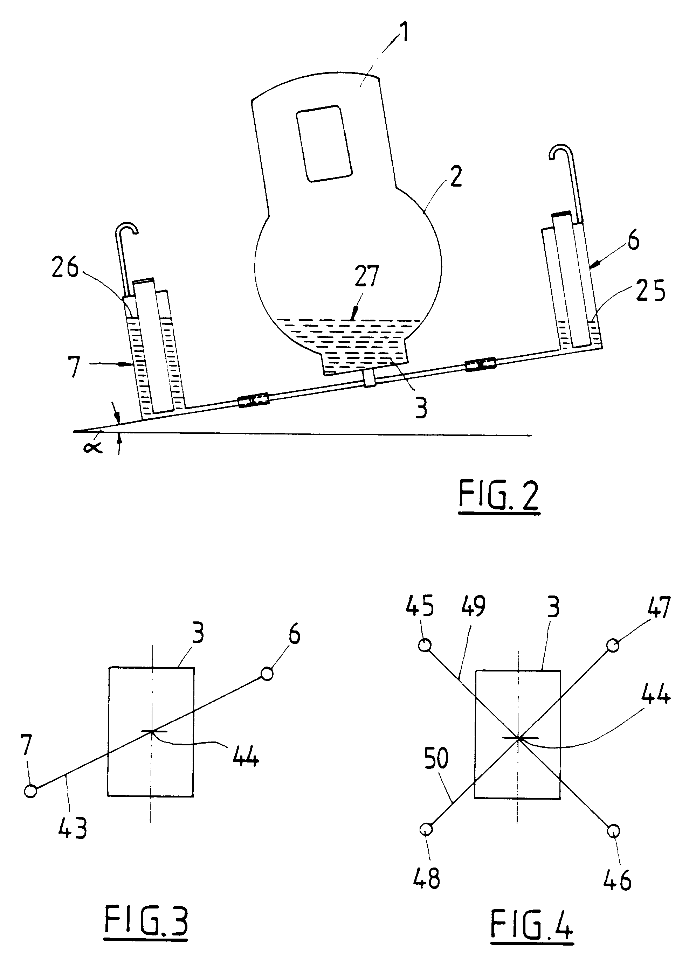

In Figur 2 ist diese Anordnung in einer Schräglage um den Winkel $\alpha$ dargestellt. Hierbei ist deutlich zu erkennen, daß die Ölspiegel 25,26 und 27 in einer gemeinsamen horizontalen Ebene liegen, so daß der Ölstand in dem Meßbehälter 6 niedrig und in dem Meßbehälter 7 hoch ist. Der Mittelwert aus den beiden Ölständen in den Meßbehältern 6 und 7 entspricht dem Ölstand in der Ölwanne 3.

In Figur 3 sind zwei Ölstandsmeßgeräte 6,7 vorgesehen, die zu beiden Seiten der Ölwanne 3 angeordnet sind. Die beiden Ölstandsmeßgeräte 6 und 7 sind derart einander zugeordnet, daß die gedachte Gerade 43 zwischen ihnen durch die Mitte 44 der Ölwanne 3 verläuft. Mit dieser Anordnung ist es möglich, bei Schräglage des Fahrzeuges den Ölstand in der Ölwanne 3 zuverlässig zu ermitteln.

Bei der in Figur 4 dargestellen Anordnung sind vier Ölstandsmeßgeräte 45,46,47 und 48 außerhalb der Ölwanne 3 auf einer gemeinsamen horizontalen Ebene angeordnet. Dabei sind die Meßgeräte 45 und 46 einander und zu der Ölwanne 3 so angeordnet, daß die gedachte Gerade 49 zwischen den Meßgeräten 45 und 46 durch die Mitte 44 der Ölwanne 3 verläuft. Desgleichen verläuft auch die gedachte Gerade 50 zwischen den Meßgeräten 47 und 48 durch die Mitte 44 der Ölwanne 3.

Die Messung des Ölstandes erfolgt diskontinulierlich bei Motorstillstand, und zwar erst dann, wenn sich nach einem Lauf des Motors das Öl 4 in der Ölwanne 3 wieder soweit gesammelt hat, daß der Ölstand genügend genau gemessen werden kann. Je nach Art der Konstruktion des verwendeten Ölstandsanzeigers 35 kann die Messung mit einem dafür vorgesehenen Schalter oder automatisch beim Einschalten bzw. Ausschalten der Zündung durchgeführt werden. Darüberhinaus kann die Messung zu unterschiedlichen Zeitpunkten erfolgen, nämlich entweder vor Fahrtbeginn bei kaltem Motor, oder vor der Weiterfahrt bei einer Fahrtunterbrechung mit Motorstillstand oder nach dem Fahrtende.

Nachstehend werden drei Möglichkeiten beschrieben, wie bzw. wann die Messung durchgeführt werden kann, falls das Ölstandsanzeigegerät 35 darauf eingerichtet ist.

Gemäß einer ersten Möglichkeit kann mit einem dafür vorgesehenen Schalter die Messung vor dem Starten des kalten Motors oder bei einer Fahrtunterbrechung mit Motorstillstand erfolgen. Bei einer Fahrtunterbrechung muß nach ausgeschalteter Zündung einige Zeit gewartet werden, bis sich das Öl 4 in der Ölwanne 3 gesammelt und sich der Ölstand beruhigt hat.

Nach einer zweiten Möglichkeit kann die Messung automatisch beim Einschalten der Zündung vor dem Starten des Motors erfolgen. Dabei wird der Zündschlüssel auf die erste Stufe des Zündschlosses gedreht, wobei an dem Ölstandsanzeiger 35 das Meßergebnis angezeigt wird. Wenn der Motor gestartet ist und läuft, verschwindet die Anzeige am Ölstandsanzeiger 35, weil das Öl 4 im Kurbelgehäuse 2 beim Lauf des Motors hoch geschleudert und für die notwendige Schmierung hochgepumpt wird.

Das so ermittelte Meßergebnis kann während der Fahrt bis zum nächsten Ausschalten der Zündung auf der Skala 36 festgehalten werden, wenn der Ölstandsanzeiger 35 durch eine geeignete Konstruktion darauf eingerichtet ist.

Gemäß einer dritten Möglichkeit kann die Messung automatisch nach dem Ausschalten der Zündung erfolgen, wenn das Öl 4 nach einer Fahrt Betriebstemperatur hat. Der Meßvorgang erfolgt zweckmäßigerweise einige Zeit nach dem Stillstand des Motors, beispielsweise mit Hilfe eines Zeitrelais erst dann, wenn sich das Öl 4 in der Ölwanne 3 wieder gesammelt hat.

Dieses Meßergebnis bleibt bis zum nächsten Einschalten der Zündung auf dem Ölstandsanzeiger 35 an-

4

gezeigt. Somit ist für den Fahrer vor dem nächsten Starten bzw. vor Beginn der nächsten Fahrt der vorhandene Ölstand sofort zu erkennen.

**Patentansprüche**

I. Anordnung zum Messen des Ölstandes in der Ölwanne des Kurbelgehäuses eines Verbrennungsmotors bei Motorstillstand, insbesondere für Kraftfahrzeuge und Motorboote mit einer Meßeinrichtung, **dadurch gekennzeichnet,**
a) daß in Fahrzeuglängsrichtung bzw. Motorlängsrichtung gesehen zu beiden Längsseiten und außerhalb der Ölwanne (3) wenigstens je ein Ölstandsmeßgerät (6,7) vorgesehen ist und die Ölstandsmeßgeräte (6,7) derart einander zugeordnet sind, daß die gedachte Gerade (43) zwischen ihnen (6,7) in der Draufsicht durch die Mitte (44) der Ölwanne (3) verläuft,
b) daß die Ölstandsmeßgeräte (6,7) in Höhe der Ölwanne (3) in gleicher Höhe angeordnet sind,
c) daß die Ölstandsmeßgeräte (6,7) mit der Ölwanne (3) in deren unterem Bereich durch Ölleitungen (I3,I5,22,24) nach Art von kommunizierenden Gefäßen verbunden sind,
d) daß die Ölstandsmeßgeräte (6,7) dem Ölstand entsprechende elektrische Meßwerte bilden und von den einzelnen elektrischen Meßwerten Durchschnittswerte gebildet werden und
e) daß am Armaturenbrett des Kraftfahrzeuges bzw. Motorbootes ein Anzeigegerät (35) zur Anzeige der elektrischen Durchschnittswerte vorgesehen ist, das mit den Ölstandsmeßgeräten (6,7) über elektrische Leitungen (40,4I,42) verbunden ist.

2. Anordnung nach Anspruch I, dadurch gekennzeichnet, daß zu beiden Längsseiten und außerhalb der Ölwanne (3) je zwei Ölstandsmeßgeräte (45,46,47,48) mit Längsabstand zueinander vorgesehen sind, wobei jeweils das auf der einen Längsseite der Ölwanne (3) vordere Meßgerät (45,47) und das auf der anderen Längsseite rückwärtige Meßgerät (46,48) paarweise derart einander zugeordnet sind, daß die gedachten Geraden (49,50) zwischen diesen jeweiligen Meßgeräten (45,46,47,48) in der Draufsicht durch die Mitte (44) der Ölwanne (3) verlaufen.

3. Anordnung nach Anspruch I oder 2, dadurch gekennzeichnet, daß die Abstände zwischen den Meßgeräten (6,7; 45,46,47,48) und der Mitte (44) der Ölwanne gleich groß sind.

4. Anordnung nach einem oder mehreren der vorhergehenden Ansprüche, dadurch gekennzeichnet, daß die Meßgeräte (6,7; 45,46,47,48) symmetrisch zur Mitte (44) der Ölwanne (3) in einer gemeinsamen horizontalen Ebene angeordnet sind.

5. Anordnung nach einem oder mehreren der vorhergehenden Ansprüche, dadurch gekennzeichnet, daß ein Ölstandsmeßgerät (6,7) aus einem Meßbehälter (8,I7) und einem darin angeordneten Meßfühler (II,20) besteht.

6. Anordnung nach einem oder mehreren der vorhergehenden Ansprüche, dadurch gekennzeichnet, daß die Meßbehälter (8,I7) Gefäße mit Entlüftung (I0,I9) und die Meßfühler (II ,20) Tauchrohrgeber sind.

7. Anordnung nach einem oder mehreren der vorhergehenden Ansprüche, dadurch gekennzeichnet, daß die Meßfühler (II ,20) Hebelgeber sind und die Meßbehälter (8,I7) die dazu passende Form haben.

8. Anordnung nach einem oder mehreren der vorhergehenden Ansprüche, dadurch gekennzeichnet, daß die Meßgeräte (6,7) am Fahrzeugrahmen oder am Querstreben angeordnet sind.

9. Anordnung nach einem oder mehreren der vorhergehenden Ansprüche, dadurch gekennzeichnet, daß in den Ölleitungen (I3,I5,22,24) zwischen den Meßgeräten (b7) und der Ölwanne (3) ein flexibles Leitungsstück (I4,23) angeordnet ist.

I0. Anordnung nach einem oder mehreren der vorhergehenden Ansprüche, dadurch gekennzeichnet, daß die Ölleitungen (I3,I5,22,24) mit der tiefsten Stelle der Ölwanne (3) verbunden sind.

II. Anordnung nach einem oder mehreren der vorhergehenden Ansprüche, dadurch gekennzeichnet, daß der gemessene Wert bis zum Ausschalten der Zündung am Anzeigegerät (35) auch während der Fahrt des Fahrzeuges festzuhalten ist.

12. Anordnung nach einem oder mehreren der vorhergehenden Ansprüche, dadurch gekennzeichnet, daß das Anzeigegerät (35) am Armaturenbrett justierbar ist.

I3. Anordnung nach einem oder mehreren der vorhergehenden Ansprüche, dadurch gekennzeichnet, daß ein Vorratsbehälter (28) für das Öl vorgesehen ist, der über eine Zuleitung (30) und eine Dosiereinrichtung (31) mit der Ölwanne (3) in Verbindung steht und in dem ein Vorratsgeber (29) angeordnet ist, wobei der von dem Vorratsgeber (29) gemessene dem Ölvorrat entsprechende elektrische Meßwert auf ein am Armaturenbrett angeordnetes Anzeigegerät (34) für den Ölvorrat zu geben ist.

## Claims

I. An arrangement for measuring the oil level in the sump of the crankcase of an internal combustion engine when the engine is stopped, in particular for motor vehicles and motor boats with a measuring apparatus, characterised in that

a) at least one oil level measuring device (6, 7) is provided at each of both longitudinal sides, as viewed in the longitudinal direction of the vehicle or engine, and outside the oil sump (3), and the oil level measuring devices (6, 7) are associated with each other in such a way that the notional straight line (43) between them (6, 7) extends in plan view through the middle (44) of the oil sump (3),

b) the oil level measuring devices (6, 7) are arranged at the same height at the height of the oil sump (3),

c) the oil level measuring devices (6, 7) are connected to the oil sump (3) in the lower region thereof by oil lines (I3, I5, 22, 24) in the lower of communicating vessels,

d) the oil level measuring devices (6, 7) form electrical measurement values corresponding to the oil level and average values are formed from the individual electrical measurement values, and

e) provided at the instrument panel of the motor vehicle or motor boat is a display device (35) for displaying the electrical average values, rich display device is connected to the oil level measuring devices (6, 7) by way of electric lines (40, 4I, 42).

2. An arrangement according to claim I characterised in that two oil level measuring devices (45, 46, 47, 48) are provided at a longitudinal spacing from each other at each of both longitudinal sides and outside of the oil sump (3), wherein the respective measuring device (45, 47) which is at the front on one longitudinal side of the oil sump (3) and the respective measuring device (46, 48) which is rearward on the other longitudinal side are associated with each other in pairs in in such a way that the notional straight lines (49, 50) between said respective measuring devices (45, 46, 47, 48) extend in plan view through the middle (44) of the oil sump (3).

3. An arrangement according to claim I or claim 2 characterised in that the spacings between the measuring devices (6, 7; 45, 46, 47, 48) and the middle (44) of the oil sump are the same.

4. An arrangement according to one or more of the preceding claims characterised in that the measuring devices (6, 7; 45, 46, 47, 48) are arranged symmetrically relative to the middle (44) of the oil sump (3) in a common horizontal plane.

5. An arrangement according to one or more of the preceding claims characterised in that an oil level measuring device (6, 7) comprises a measuring container (8, I7) and a measuring sensor (II, 20) arranged therein.

6. An arrangement according to one or more of the preceding claims characterised in that the measuring containers (8, I7) are vessels with venting means (I0, I9) and the measuring sensors (II, 20) are immersion tube transmitters.

7. An arrangement according to one or more of the preceding claims characterised in that the measuring sensors (II, 20) are lever transmitters and the measuring containers (8, I7) are of a shape suited thereto.

8. An arrangement according to one or more of the preceding claims characterised in that the measuring devices (6, 7) are arranged on the vehicle frame structure or on the transverse strut.

9. An arrangement according to one or more of the preceding claims characterised in that a flexible line portion (I4, 23) is disposed in the oil lines (I3, I5, 22, 24) between the measuring devices (6, 7) and the oil sump (3).

I0. An arrangement according to one or more of the preceding claims characterised in that the oil lines (I3, I5, 22, 24) are connected to the lowest point of the oil sump (3).

II. An arrangement according to one or more of the preceding claims characterised in that the measured value is to be retained at the display device (35) even rile the vehicle is moving, until the ignition is switched off.

I2. An arrangement according to one or more of the preceding claims characterised in that the display device (35) at the instrument panel is adjustable.

I3. An arrangement according to one or more of the preceding claims characterised in that there is provided a supply container (28) for the oil, rich communicates with the oil sump (3) by way of a feed line (30) and a metering means (3I) and in rich a supply transmitter (29) is disposed, wherein the electrical measurement value rich is measured by the supply transmitter (29) and rich corresponds to the oil supply is passed to a display device (34) for the oil supply, rich display device is disposed at the instrument panel.

## Revendications

1. Agencement de mesure du niveau d'huile dans le réservoir d'huile du carter d'un moteur à combustion interne à l'arrêt, en particulier pour les véhicules et bateaux à moteur avec un dispositif de mesure, **caractérisé en ce que**

a) dans le sens longitudinal du véhicule ou du moteur, des deux côtés longitudinaux du réservoir d'huile (3) et à l'extérieur de celui-ci est prévu au moins un appareil de mesure du niveau d'huile (6, 7), et les appareils de mesure du niveau d'huile (6, 7) sont agencés de telle sorte que la droite imaginaire (43) qui les relie passe par le centre (44) du réservoir d'huile (3), vu en plan de dessus,

b) les appareils de mesure du niveau d'huile (6, 7) sont disposes à la même hauteur par rapport au réservoir d'huile (3),

c) les appareils de mesure du niveau d'huile (6, 7) sont reliés, à la manière de vases communicants, au réservoir d'huile (3), dans la partie inférieure de celui-ci, par des conduites d'huile (13, 15, 22, 24),

d) les appareils de mesure du niveau d'huile (6, 7) créent des valeurs électriques de mesure correspondant au niveau d'huile, et des valeurs moyennes des valeurs électriques de mesure individuelles sont créées,

e) et **en ce que** sur le tableau de bord du véhicule à moteur ou du bateau à moteur est prévu un dispositif d'affichage (35) destiné à afficher les valeurs électriques moyennes et relie aux appareils de mesure du niveau d'huile (6, 7) par des conduites électriques (40, 41, 42).

2. Agencement selon la revendication 1, **caractérisé en ce que** sur chacun des deux côtes du réservoir d'huile (3) et à l'extérieur de celui-ci sont prévus deux appareils de mesure du niveau d'huile (45, 46, 47, 48) écartés l'un de l'autre dans le sens longitudinal, chacun des appareils de mesure (45, 47) placés vers l'avant sur un côte longitudinal du réservoir d'huile (3) étant relié en paire à l'appareil de mesure (46, 48) situe vers l'arrière de l'autre côte longitudinal du réservoir d'huile (3), de telle sorte que les droites imaginaires (49, 50) qui relient les appareils de mesure (45, 46, 47, 48) de chacune des paires passent par le centre (44) du réservoir d'huile (3), vu en plan de dessus.

3. Agencement selon la revendication 1 ou 2, **caractérisé en ce que** les distances séparant les appareils de mesure (6, 7; 45, 46, 47, 48) et le centre (44) sont égales.

4. Agencement selon l'une ou plusieurs des revendications précédentes, **caractérisé en ce que** les appareils de mesure (6, 7; 45, 46, 47, 48) sont disposés symétriquement par rapport au centre (44) du réservoir d'huile (3), dans un plan horizontal commun.

5. Agencement selon l'une ou plusieurs des revendications précédentes, **caractérisé en ce qu**'un appareil de mesure du niveau d'huile (6, 7) est constitué d'un réservoir de mesure (8, 17) et d'une sonde de mesure (11, 20) disposée dans celui-ci.

6. Agencement selon l'une ou plusieurs des revendications précédentes, **caractérisé en ce que** les réservoirs de mesure (8, 17) sont des récipients avec évent (10, 19), et les sondes de mesure (11, 20) sont des transmetteurs à tube plongeur.

7. Agencement selon l'une ou plusieurs des revendications précédentes, **caractérisé en ce que** les sondes de mesure (11, 20) sont des transmetteurs à levier, et les réservoirs de mesure (8, 17) possèdent une forme adaptée à ces transmetteurs à levier.

8. Agencement selon l'une ou plusieurs des revendications précédentes, **caractérisé en ce que** les appareils de mesure (6, 7) sont installés sur le châssis du véhicule ou sur des traverses.

9. Agencement selon l'une ou plusieurs des revendications précédentes, **caractérisé en ce qu**'un morceau de conduite flexible (14, 23) est installé sur les conduites d'huile (13, 15, 22, 24) entre les appareils de mesure (6, 7) et le réservoir d'huile (3).

10. Agencement selon l'une ou plusieurs des revendications précédentes, **caractérisé en ce que** les conduites d'huile (13, 15, 22, 24) sont connectées au point le plus bas du réservoir d'huile (3).

11. Agencement selon l'une ou plusieurs des revendications précédentes, **caractérisé en ce que** l'affichage de la valeur mesurée sur le dispositif d'affichage (35) est maintenu jusqu'à l'interruption du contact moteur, même pendant que le véhicule se déplace.

12. Agencement selon l'une ou plusieurs des revendications précédentes, **caractérisé en ce que** le dispositif d'affichage (35) peut être étalonné sur le tableau de bord.

13. Agencement selon l'une ou plusieurs des revendications précédentes, **caractérisé en ce qu'**un réservoir de réserve d'huile (28) est prévu, qui est relié au réservoir d'huile (3) par l'intermédiaire d'une conduite d'amenée (30) et un dispositif de dosage (31) et dans lequel est installé un transmetteur de réserve (29), tandis que la valeur électrique de mesure mesurée par le transmetteur de réserve (29) et correspondant à la réserve d'huile est transmise à un dispositif d'affichage (34) de la réserve d'huile installé sur le tableau de bord.

FIG. 1

FIG.2

FIG.3

FIG.4